# EUROPÄISCHE PATENTSCHRIFT

(11) **EP 1 084 914 B1**
(45) Veröffentlichungstag und Bekanntmachung des Hinweises auf die Patenterteilung: **01.02.2006**
(21) Anmeldenummer: 00118034.8
(22) Anmeldetag: 23.08.2000
(51) Int. Cl.: B60R 21/13, B60J 7/12, B62D 65/00

(54) **Bauteilgruppe für ein Cabriolet-Fahrzeug**
Pre-mounted assembly for a convertible vehicle
Module préassemblé pour un véhicule cabriolet

(30) Priorität: 13.09.1999 DE 19943582
(43) Veröffentlichungstag der Anmeldung: 21.03.2001
(73) Patentinhaber: Wilhelm Karmann GmbH, 49084 Osnabrück (DE)
(72) Erfinder: Licher, Siegfried, 49124 Georgsmarienhütte (DE)
(74) Vertreter: Busse & Busse Patentanwälte

(56) Entgegenhaltungen:
- DE-A- 3 922 509
- DE-A- 4 017 778
- DE-A- 19 642 821
- DE-A- 19 806 766
- FR-A- 2 695 081

## Beschreibung

Die Erfindung bezieht sich auf eine Bauteilgruppe für ein Cabriotet-Fahrzeug nach dem Oberbegriff des Patentanspruchs 1.

Cabriolet-Fahrzeuge der eingangs genannten Art weisen üblicherweise einen zwei-oder mehrsitzigen Insassenraum auf, der von einem Fahrzeugheckbereich, insbesondere einem Kofferraum und/oder Verdeckaufnahmeraum, abgetrennt ist Die hierfür vorgesehene Begrenzungswand muß bei moderneren Fahrzeugen während der Produktion mit einer Überrollschutzvorrichtung ausgerüstet werden, wobei zunehmend eine ausfahrbare Überrollschutzvorrichtung, die im wesentlichen im Normalzustand unsichtbar ist, gewünscht wird.

Weiterhin ist bei Cabriolets mit festen Dachteilen häufig ein Heckdeckel vorgesehen, der sowohl in Freigabestellung für den Durchtritt des Daches als auch in umgekehrter Öffnungsrichtung zur Freigabe einer Aufnahmeöffnung für Gepäck zu öffnen ist. Ein derartiger Heckdeckel erfordert - wie auch ein ausfahrbarer Überrollschutz - einen hohen Teileaufwand, der mit einem hohen Montageaufwand bei der Fahrzeugherstellung verbunden ist.

Aus der gattungsbildenden DE 196 42 821 ist eine Bauteilgruppe für ein Cabriolet-Fahrzeug bekannt, die einen Insassenraum von einem heckseitigen Fahrzeugbereich abtrennt und hierfür eine in eingebauter Stellung im wesentlichen vertikal stehende Begrenzungwand umfaßt. Die Bauteilgruppe ist als vormontierte und in eine Fahrzeugkarosserie einsetzbare Baueinheit ausgebildet, wobei diese Baueinheit in im wesentlichen kastenförmiger Ausbildung mit seitlichen Verbindungsschenkeln für die Karosserie eine ausfahrbare Überrollschutzvorrichtung aufnehmen kann. Dabei hat die Baueinheit eine in Einbaustellung vordere Wandung in Gestalt eines durchgehenden Trägers mit darunter liegender Öffnung und eine hintere Wandung, zwischen denen die Überrollschutzvorrichtung angeordnet ist. Nachteilig hierbei ist, daß zum Beispiel Gepäckstücke in den Bereich der Überroltschutzvorrichtung eindringen können. Aufgrund der kastenförmigen Struktur ist die Karosserie nicht wirkungsvoll in diesem Bereich auszusteifen.

Aus der DE 199 06 766 A1 ist ein Überrollschutz für ein Cabriolet-Fahrzeug bekannt, der einen aufblasbaren Gassack umfaßt, der in einem Gehäusebereich angeordnet ist. Hierbei ist nachteilig, daß der Überroflschutz während der Fahrzeugkarosserieherstellung einzubauen ist, so daß eine seperate Vormontage nicht möglich ist.

Es ist Aufgabe der vorliegenden Erfindung, eine Baueinheit der eingangs genannten Art zu schaffen, bei der unter Beibehaltung der vorteilhaften Vormontage der Baueinheit eine Baueinheit zur Verfügung steht, bei der die Überrollschutzvorrichtung sicher anzuordnen ist und die darüber hinaus ein Beitrag zur Aussteifung der Fahrzeugkarosserie leisten kann.

Zur Lösung dieser Aufgabe zeichnet sich die Bauteilgruppe der eingangs genannten Art durch die im Patentanspruch 1 angegebenen Merkmale aus. Hinsichtlich weiterer vorteilhafter Ausgestaltung wird auf die Ansprüche 2 bis 15 verwiesen.

Durch die Ausbildung der Bauteilgruppe als eine vormontierte und in die Fahrzeugkarosserie einsetzbare Baueinheit, die sowohl die ausfahrbare Überrollschutzvorrichtung als auch deren Antriebs- und Steuerungsteile umfaßt, ist eine erhebliche Erleichterung der Montage erreicht Die so gebildete Baueinheit kann in einem einzigen Montageschritt in die vorgesehene Fahrzeugkarosserie eingesetzt werden und muß dann nur noch an den Kabelbaum im Fahrzeug angeschlossen werden. Weitere Antriebseinheiten für die Überrolischutzvorrtchtung sind entbehrlich. Auch eine Verbindung mit Antriebsteiten oder dergleichen muß nicht mehr stattfinden. Besonders vorteilhaft sind auch die Auslösesensoren für die ausfahrbare Überrollschutzvorrichtung in der Baueinheit bereits enthalten. Damit kann ein Zulieferer die komplette Baueinheit in einen laufenden Produktionsprozeß anliefern, so daß an dem dortigen Montageband verschiedene Fahrzeugtypen, insbesondere offene und geschlossene, gefertigt werden können.

Die Baueinheit umfaßt eine vordere und hintere Wandung, zwischen denen die Überrollschutzvorrichtung angeordnet ist Dadurch ist eine Beschädigung der Überrollschutzvorrichtung durch an die hintere Wand anstoßende Gepäckteile des Kofferraums ebenso ausgeschlossen wie durch Insassen, die sich vor der vorderen Wand befinden. Bei vorsehen einer beide Wandungen durchdringenden und fluchtenden Formausnehmung ist eine Durchlademöglichkeit für Skier oder dergleichen sperrige Gegenstände aber dennoch möglich.

Besonders vorteilhaft sind Flanschbereiche an der Baueinheit ausgebildet, so daß diese unproblematisch mit der Karosserie verbunden, beispielsweise verschraubt werden kann. Das Gewicht der Baueinheit läßt sich durch Einsatz von Leichtbauwerkstoffen, insbesondere metallischen Schaumwerkstoffen, wie etwa Aluminiumschaumwerkstoff, senken.

Wenn die Baueinheit zusätzlich beidseits Halterungen für Hauptlager eines anzumontierenden Daches des Cabriolet-Fahrzeugs umfaßt, müssen diese Halterungen nicht mehr separat an der Karosserie anmontiert werden, sondern die so versehene Baueinheit kann in einem Montageschritt in die Karosserie eingesetzt werden. An die seitlichen Halterungen kann dann unmittelbar das Verdeck angeschlossen werden, wobei die entsprechenden Aufnahmeöffnungen für die Hauptlager in den Halterungen bereits vorgesehen sind. Die Vorteilhaftigkeit einer derartigen Anordnung wird noch dadurch vergrößert, daß zusätzlich das Hydrauliksystem zur Bewegung des anzumontierenden Daches an der Baueinheit vormontiert ist, Auch dieses kann dann außerhalb des Fahrzeugs bereits angeordnet werden, so daß die Fahrzeugmontage erleichtert ist, insbesondere dann, wenn eventuelle Hydraulikzylinder zur Bewegung des Daches bereits vollständig montiert und vor der Montage in die Karosserie befüllt und funktionsfähig ansteuerbar sind. Dann muß auch für den gesamten Dachantrieb nur noch ein elektrischer Anschluß geschaffen werden, um die Pumpeinheit und die Betätigungsschalter miteinander zu verbinden. Die hydraulische Antriebseinheit für das Dach ist dabei abgeschlossen, so daß eine Verbindung mit weiteren eventuell vorhandenen Hydraulikelementen im Fahrzeug nicht erforderlich ist.

Besonders vorteilhaft ist an die seitlichen Halterungen bereits ein Dach anmontiert, so daß auch dieses mit in die Karosserie eingesetzt wird. Das Dach ist dabei vorteilhaft bereits an die hydraulischen Antriebselemente angeschlossen, so daß auch hierfür ein weiterer Montageschritt im Fahrzeug nicht erforderlich ist.

Die Baueinheit kann eine Doppelfunktion erfüllen, wenn sie einen tragenden und torsionsvermindernden Teil der Karosserie ausbildet, so daß sie neben der Trennfunktion und der Aufnahme der Überrollschutzvorrichtung gleichzeitig auch ein Aussteifungsbauteil ausbildet, wodurch der zusätzliche Aussteifungsaufwand in der Karosserie, wie er beim Umbau zum Cabriolet gegenüber einem Coupe, erforderlich ist, vermindert werden kann. Im Idealfall stellt dieser Torsionsträger, der durch die Baueinheit gebildet ist, das einzige zusätzliche Versteifungsteil der aufgeschnittenen Karosserie dar. Dadurch ist eine erhebliche Montageerleichterung erreicht, die allerdings auch noch gegeben ist, wenn weitere Aussteifungsmaßnahmen erforderlich sind.

Bei erfindungsgemäßer Verwirklichung einer Bauteilgruppe mit einem Heckdeckel, der in zwei verschiedene Richtungen geöffnet werden kann, um dadurch einen Dachdurchtritt bzw. die Freigabe einer Gepäckaufnahmeöffnung zu erreichen, ist die Montage dadurch vereinfacht, daß auch hier eine vormontierte Baueinheit vorgesehen ist, die sowohl das Mehrgelenk zur Öffnung der Gepäckdurchtrittsöffnung als auch die Antriebsorgane, die zumindest die Öffnung des Heckdeckels zur Freigabe der Durchtrittsöffnung für das Dach bewirken, bereits in die Baueinheit integriert sind und somit als Kompletteinheit in die aufgeschnittene Karosserie eingesetzt werden können. Weitere Montageschritte für den Heckdeckel sind dann entbehrlich.

Eine komplette Baueinheit, umfassend sowohl den Heckdeckel als auch die Bauteilgruppe mit der Begrenzungswand und der Überrollschutzvorrichtung eventuell ergänzt um Halterungen für das Hauptlager, eventuell ergänzt um das Dach, kann den Montageaufwand zusätzlich verringern.

Weitere Vorteile und Merkmale ergeben sich aus in der Zeichnung dargestellten und nachfolgend beschriebenen Ausführungsbeispielen des Gegenstandes der Erfindung. In der Zeichnung zeigt
- Fig. 1: eine Bauteilgruppe mit einer im wesentlichen vertikal stehenden Begrenzungswand und einer ausfahrbaren Überrollschutzvorrichtung in perspektivischer Darstellung,
- Fig. 2: die Bauteilgruppe nach Fig. 1 mit ausgefahrener Überrollschutzvorrichtung,
- Fig. 3: einen Schnitt entlang der Linie III-III in Fg. 2,
- Fg. 4: die Bauteilgruppe nach Fg. 1 während des Einsatzes in die aufgeschnittene Karosserie,
- Fig. 5: die Bauteilgruppe nach Fig. 1 in Explosionsdarstellung,
- Fg. 6: eine ähnliche Ansicht wie Fig. 1 einer Baueinheit, die um die Halterungen zur Aufnahme des Hauptlagers des Daches sowie um Antriebsorgane zur Bewegung des in das Hauptlager eingesetzten Daches ergänzt ist,
- Fig. 7: die Baueinheit nach Fig. 6 in Explosionsdarstellung,
- Fig. 8: eine Bauteilgruppe mit Halterungen für das Hauptlager, mit anmontierten Hauptlagern und Antriebsorganen und mit daran angesetztem beweglichem Dach,
- Fig. 9: die Bauteilgruppe nach Fig. 8 mit abgenommenen Dach,
- Fig. 10: die Bauteilgruppe nach Fig. 9 in Explosionsdarstellung.
- Fig. 11: eine Bauteilgruppe mit Heckdeckel mit anmontierten Antriebsorganen in Seitenansicht,
- Fig. 12: die Bauteilgruppe nach Fig. 11 bei Einsatz in ein Cabriolet-Fahrzeug,
- Fig. 13: ein Komplettmodul, umfassend die Baueinheit nach Anspruch 1, ergänzt um seitliche Halterungen für die Hauptlager, das darin eingesetzte Hauptlager, die Antriebsorgane und das Dach, zusammengefaßt mit einer Bauteilgruppe, die den Heckdeckel gemäß Anspruch 16 umfaßt.

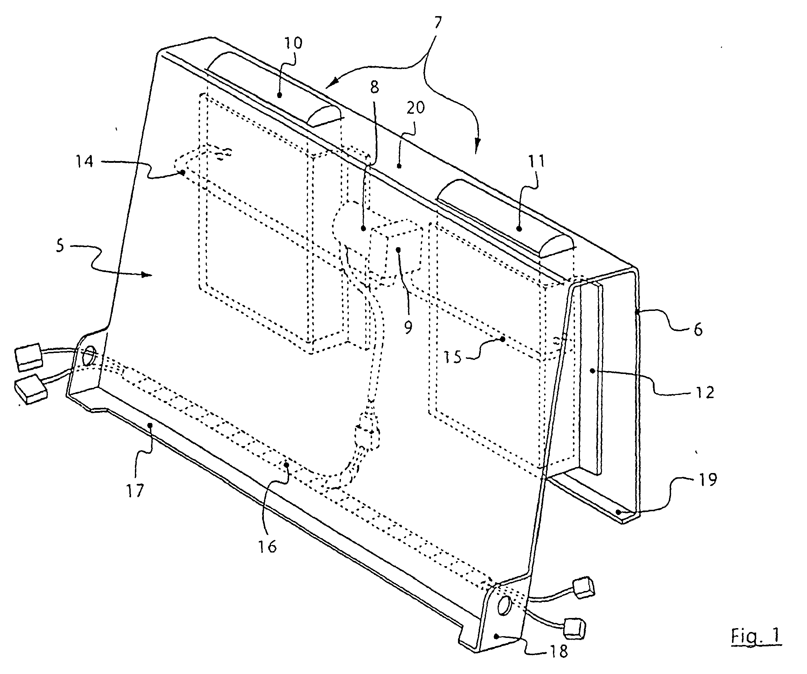

Die Bauteilgruppe 2 gemäß Fig. 1 ist als Baueinheit zusammengefaßt und in ein Cabriotet-Fahrzeug 1 einsetzbar. Im montierten Zustand trennt die Baueinheit 2 einen Fahrzeuginnenraum 3 von einem Heckbereich 4 ab, wobei der Heckbereich z. B. einen Dachaufnahmeraum 59a sowie einen Kofferraum 59b umfassen kann. Die Baueinheit 2 umfaßt eine vordere Begrenzungswand 5 und eine hintere Wandung 6, wobei die vordere Begrenzungswand 5 dem Insassenraum 3 zugewandt ist und die hintere Wand 6 dem Verdeckaufnahme- und Kofferraum 4. Zusätzlich umfaßt die Baueinheit 2 eine ausfahrbare Überrollschutzvorrichtung 7, deren Antriebsteile 8 sowie eine Steuerung 9. Die Überrollschutzvorrichtung umfaßt im Ausführungsbeispiel zwei einzelne Überrollbügel 10,11; auch die Ausbildung eines einzigen, die Fahrzeugbreite im wesentlichen ausfüllenden Überrollbügels ist möglich. Die beiden Überrollbügel 10,11 sind in Kassetten 12 aufgenommen und vertikal geführt. Die Kassetten 12 sind in einem Zwischenraum zwischen der vorderen Wandung 5 und der hinteren Wandung 6 angeordnet. Die Wandungen 5,6 können - nicht eingezeichnet - jeweils eine Ausnehmung aufweisen, wobei die beiden Ausnehmungen miteinander fluchten und eine Durchlademöglichkeit für Skier oder dergleichen freigeben.

Um die Bewegung der Überrollschutzvorrichtung 7 sicherstellen zu können, sind Antriebs- und Steuerungsleitungen 14,15 sowie auch Energieversorgungsleitungen 16 vorgesehen. Die Sensoren zur Signalisierung eines Überschlags können sowohl in der Baueinheit 2 als auch separat angeordnet sein. Bei separater Anordnung sind die Leitungen 16 gleichzeitig als Signalübertragungsleitungen vorzusehen.

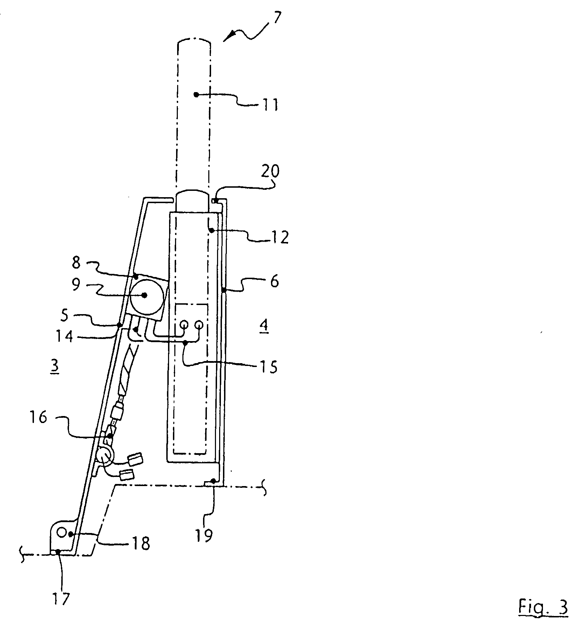

An unteren und seitlichen Bereichen der Baueinheit 2 sind Flanschbereiche 17,18,19 angeordnet, über die die Verbindung zur Fahrzeugkarosserie, wie in Fig. 3 eingezeichnet, erfolgen kann. Die Verbindung kann beispielsweise über ein Verschrauben oder Verschweißen hergestellt werden. Die seitlichen Flansche 18 können auch als Widerlager eines daran festgelegten Antriebs 32 (sh. u.) dienen.

Die Baueinheit 2 umfaßt neben der vorderen Wandung 5 und der hinteren Wandung 6 auch noch eine oberseitige, in Einbaustellung im wesentlichen horizontale Verbindungswand 20, die die beiden Wandungen 5 und 6 miteinander verbindet und von der ausgehend sich erstgenannte trapezförmig nach unten erweiternd erstrecken, so daß insgesamt ein im Querschnitt im wesentlichen trapezförmiges Bauteil (Fig. 3) geschaffen ist. Die Verbindungswand 20 weist Durchtrittsöffnungen 21 für die Überrollbügel 10,11 auf.

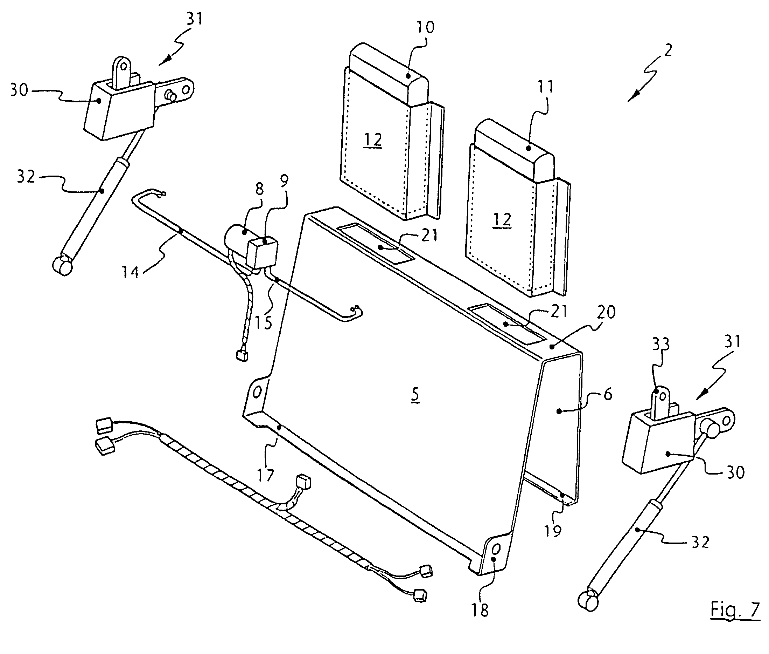

In einem weiterentwickelten Ausführungsbeispiel (Fg. 6, Fig. 7) ist die Baueinheit 2 zusätzlich mit beidseitigen Halterungen 30 zur Aufnahme von Hauptlagern 31 eines an der Baueinheit anmontierbaren Daches ausgestattet. Dabei sind die Halterungen 30 an der Baueinheit 2 ebenso vormontiert wie die Hauptlager 31 in den Halterungen 30. Auch ist das hydraulische Antriebssystem 32 für die Dachbewegung mit an der Baueinheit 2 vormontiert, befüllt und funktionsfähig. Die Gestängeteile 33 für ein Dach 40 (sh. u.) können zumindest teilweise ebenfalls mit vormontiert sein. Damit ist eine Baueinheit 2 geschaffen, die einerseits ein Aussteifungsbauteil für die Karosserie bildet, andererseits sowohl das vollständig funktionsfähige Antriebs- und Auslösesystem für eine Überrollschutzvorrichtung 7 sowie diese selbst enthält und schließlich auch das Antriebssystem 32 für ein Dach umfaßt.

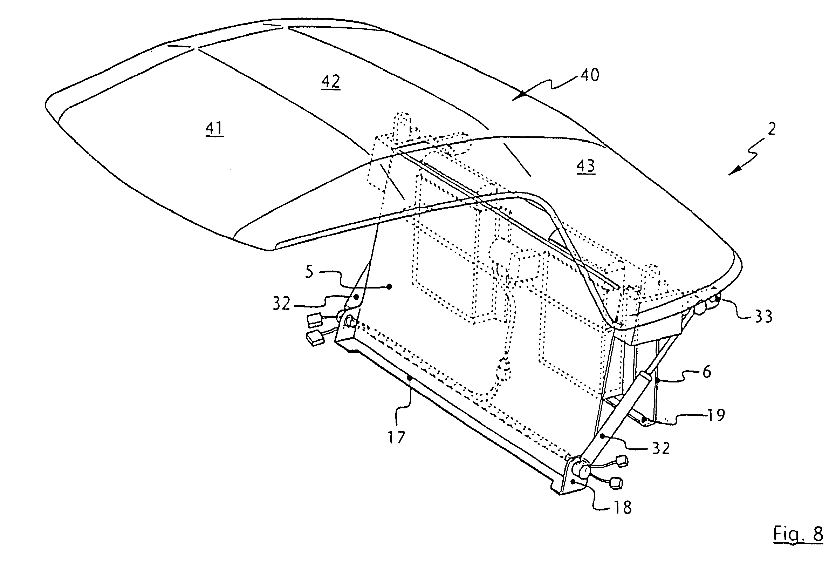

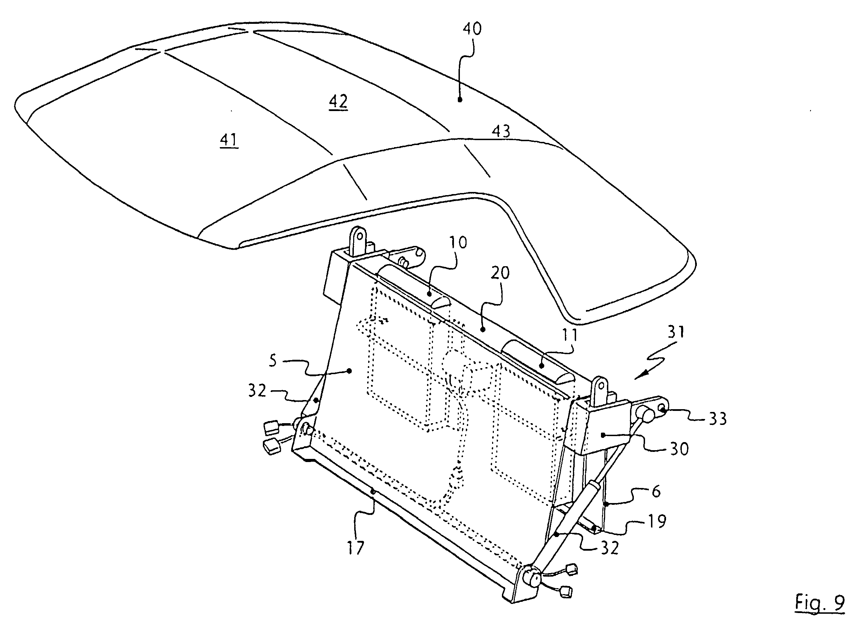

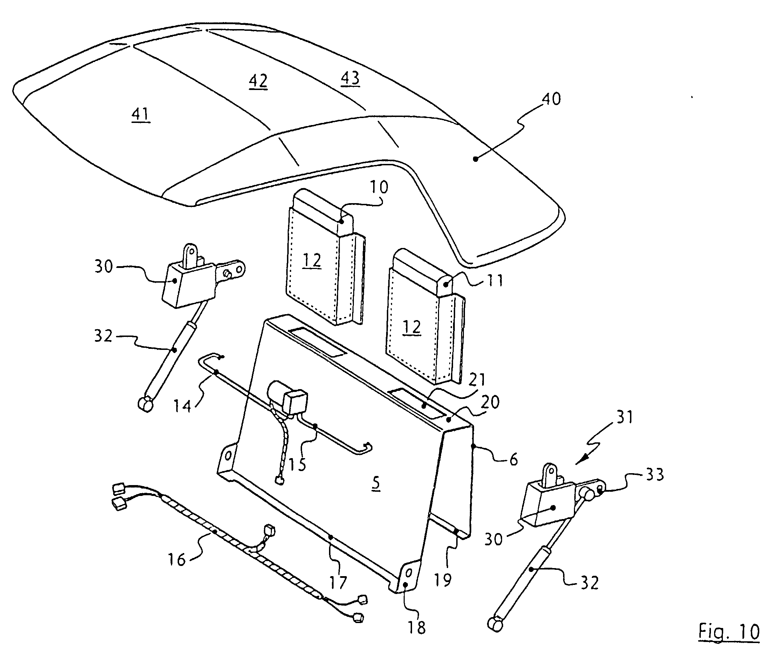

Gemäß einer weiteren Ergänzung der Baueinheit 2 (Fig. 8 bis 10) ist vorgesehen, daß neben den bisher genannten Teilen auch das Dach 40 selbst mit an die Baueinheit 2 angeschlossen ist, d. h., daß insgesamt eine Baueinheit geschaffen ist, die als Kompletteil in die Karosserie einsetzbar ist und dann die vollständige Cabriolet-Funktion bis auf elektrische Anschlüsse umfaßt. Es muß insbesondere keine Ausrichtung des Daches 40 mehr in der Fahrzeugkarosserie erfolgen, da dieses durch die Hauptlager 31 an den Wandungen 5,6 ausgerichtet ist, wobei letztere über die Flansche 17,19 in der Karosserie festgelegt und ausgerichtet sind, so daß auch das Dach 40 mit ausgerichtet ist. Das Dach 40 kann sowohl ein flexibles Dach als auch ein teilweise oder insgesamt feste Dachteile 41,42,43 umfassendes Dach sein.

Die Baueinheit 2 kann insgesamt als Leichtbauteile umfassende Bauteilgruppe ausgebildet sein, d. h., daß insbesondere die Wandungen 5,6,20 als Leichtbauteile ausgebildet sind, beispielsweise ein Aluminiumschaumbauteil ausbilden oder dieses umfassen. Bei Verwendung metallischer Schäume ist gewährleistet, daß trotz des Leichtbaus die Baueinheit 12 ein tragendes und torsionsverminderndes Teil der Karosserie ausbildet Damit ist die Baueinheit 2 nicht alleine ein Trägerteil für das Dach, sondern erfüllt zusätzlich die Aussteifungsfunktion, insbesondere Torsionsminderung, die bei Cabriotet-Fahrzeugen unerläßlich ist. Die Baueinheit 2 ist in sich modular aufgebaut und bildet insgesamt ein Modul zum Einsatz in die Fahrzeugkarosserie aus, wobei die Einzelmodule in der Baueinheit 2 gebildet sind durch den Wandungsteil 5,6,20, die Kassetten 12, die Antriebssysteme 8,9,14,15 für die Überrollschutrrorrichtung 7, die Antriebssysteme 32, die ebenfalls mit Pumpen und Steuerungsmechanismen ausgerüstet sind für das Dach 40, die Halterungen 30 mit den Hauptlagern 31 und eventuell Gestängeteiten 33, und das Dach 40 selbst.

Alternativ oder zusätzlich kann eine weitere Bauteitgruppe 50 vorgesehen sein, die einen Heckdeckel 51 umfaßt, der in montierter Stellung einerseits in Richtung des Pfeils 52 zur Freigabe einer seinem vorderen Endbereich 53 benachbarten Durchtrittsöffnung für das Dach 40 und andererseits zur Freigabe einer seinem hinteren Endbereich 54 benachbarten Aufnahmeöffnung für Gepäck entlang dem Pfeil 55 geöffnet werden kann, wobei der Heckdeckel 51 in seiner geschlossenen Stellung den Kofferraum 59b und einen Verdeckaufnahmeraum 59a, die sich beide im Heckbereich 4 des Fahrzeugs 1 befinden, überdeckt. Der Heckdeckel benötigt zu seiner Bewegung zumindest ein Antriebsorgan 56, in der Regel zwei Hydraulikzylinder, die sich symmetrisch zu einer vertikalen Fahrzeuglängsmittelebene beidseits im Fahrzeug befinden. Mehrere Schlösser und Steuerungsteile, nicht alle eingezeichnet, sind ebenfalls vorhanden. Ebenso ist eine Mehrgelenkanordnung zur Bewirkung der Öffnung des Deckelteils 51 im Sinne einer Freigabe der Gepäckdurchtrittsöffnung vorgesehen. Der Heckdeckel 51 ist in Zusammenfassung all dieser Teile als Baueinheit 50 ausgebildet, wobei die Baueinheit 50 vormontiert ist sowohl mit den Antriebsorganen 56 als auch mit dem genannten Gelenk zur Öffnung des Heckdeckels 51 im Sinne einer Freigabe der Gepäckdurchtrittsöffnung. Diese Baueinheit 50 ist als Komplettmodul in die aufnahmebereite Karosserie einmontierbar und kann hier über seitliche Halterungen 57, beispielsweise über Verschraubungen 58, festgelegt werden. Mit einem einzigen Montageschritt im Fahrzeug ist daher der Heckdeckel 51 mit seinen Antriebs-, Steuerungs- und Schloßteilen einsetzbar, wodurch der Montageaufwand ebenfalls erheblich verringert ist. Das vollständige Hydrauliksystem zur Bewirkung der Öffnung des Heckdeckels 51 ist ebenfalls in der vormontierten Baueinheit 50 enthatten, befüllt und funktionsfähig. Es muß daher nur noch eine elektrische Anschlußleitung für die entsprechende Hydraulikpumpeneinheit angeschlossen werden.

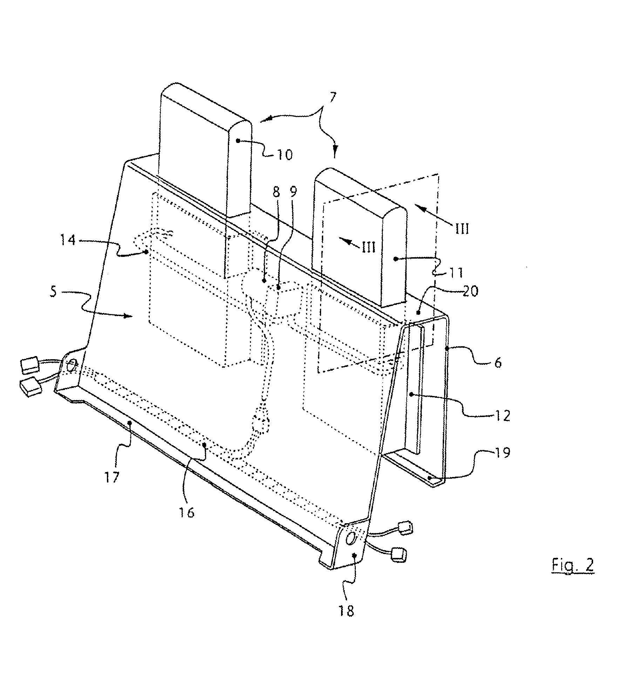

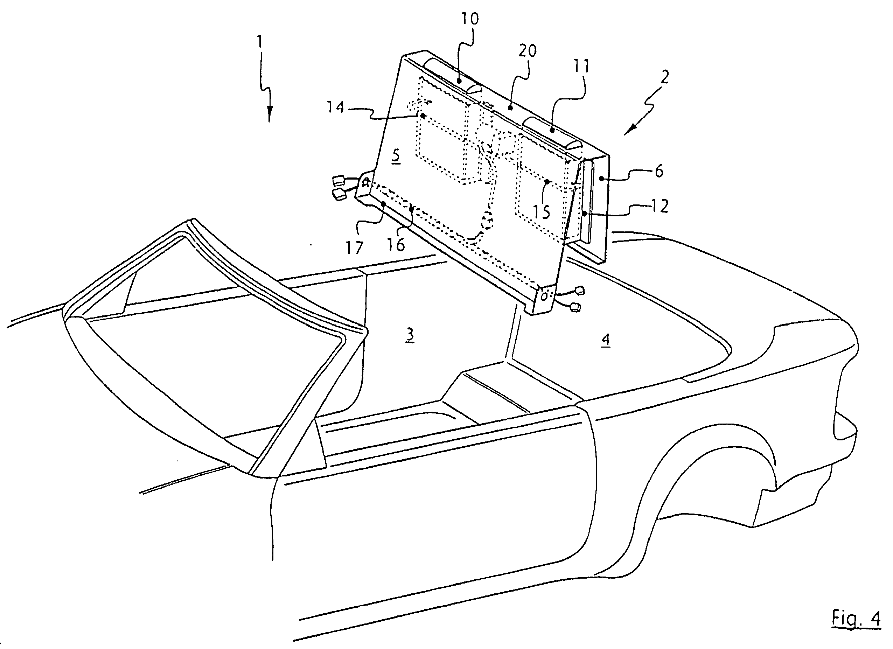

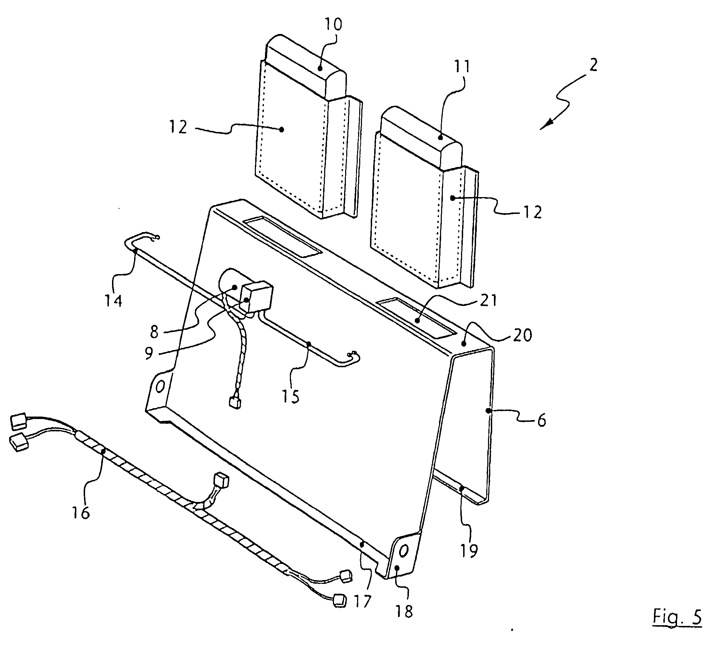

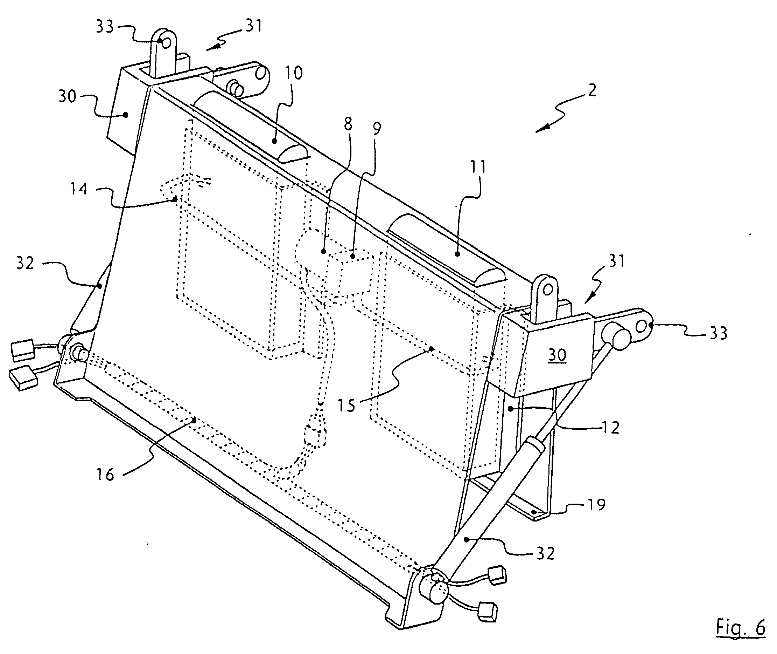

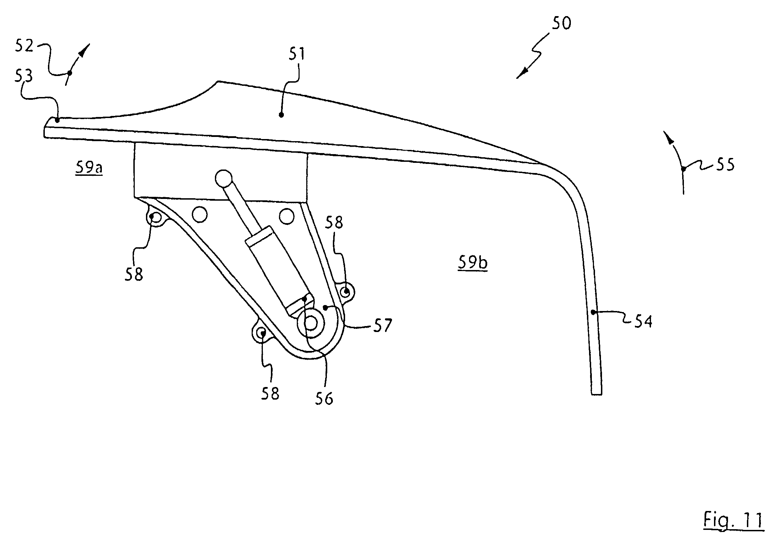

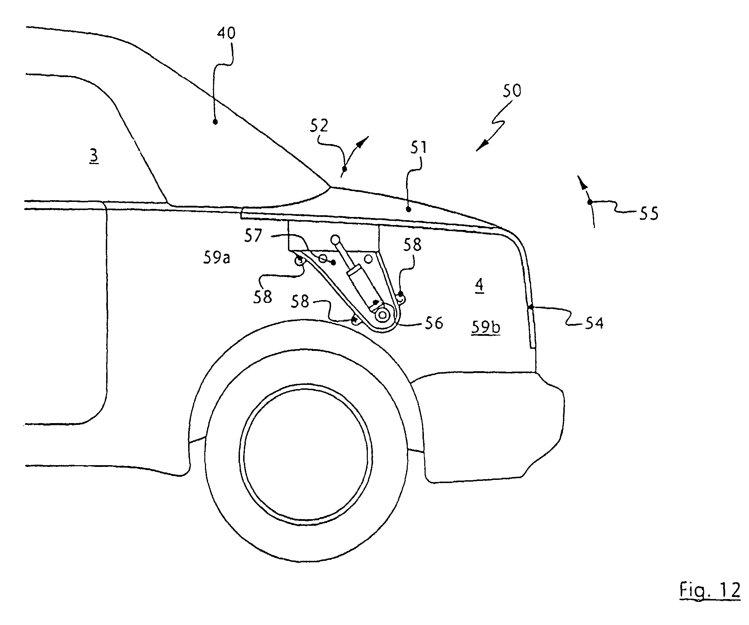

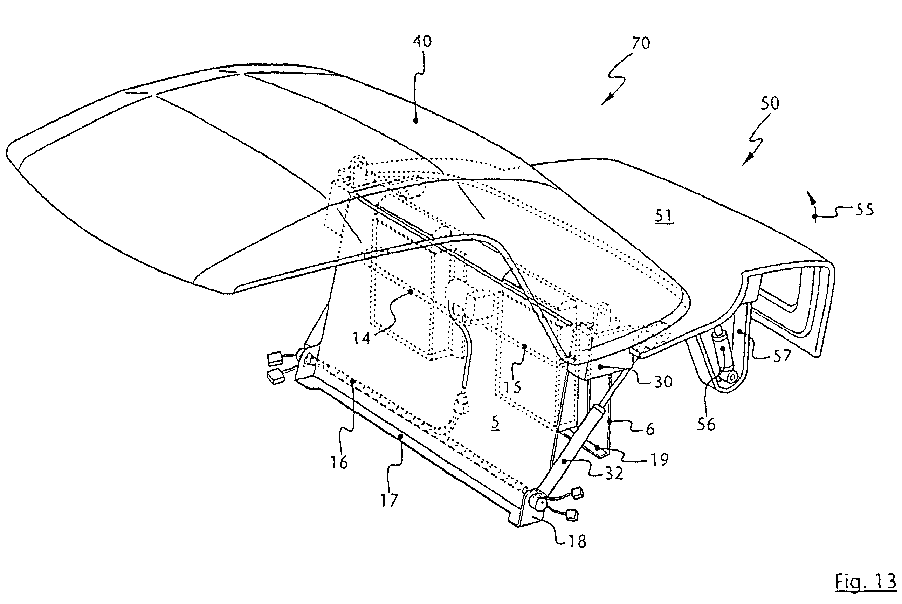

Gemäß Fig. 13 ist insgesamt ein Komplettmodul 60 ausgebildet, das einerseits die Baueinheit 2 nach den Figuren 1 bis 10 und andererseits die Baueinheit 50 nach den Figuren 11 und 12 umfaßt. Die Baueinheit 2 kann dabei insbesondere mit den Halterungen 30, Hauptlagern 31 und dem Dach 40 versehen sein, so daß das Komplettmodul 60 alle cabrioletrelevanten Teile umfaßt und lediglich noch an die entsprechende Betätigungsschalter über elektrische Verbindungsfeitungen sowie an eine Energieversorgung angeschlossen werden muß. Damit sind sowohl die Überrollschutzvorrichtung 7 als auch die Begrenzungswand 5,6 als auch das Dach 40 und der bewegliche Heckdeckel 51 in einem Modul zusammengefaßt, das als Komplettbauteil in die aufnahmebereite Fahrzeugkarosserie eingesetzt werden kann. Da alle Hydrauliksysteme für die Antriebe 32 und 56 befüllt sind, müssen keine hydraulischen Anschlußleitungen verlegt werden. Auch die Antriebsorgane 8,9 für die Überrollschutzvorrichtung 7 sind montiert, ebenso wie sämtliche Antriebsvorrichtungen zur Bewegung des Dachs und des Heckdeckels. Das so erhaltene Komplettmodul 60 ist daher in einem Schritt montierbar.

## Patentansprüche

1. Bauteilgruppe (2) für ein Cabriolet-Fahrzeug (1), wobei die Bauteilgruppe (2) einen Insassenraum (3) von einem heckseitigen Fahrzeugbereich (4) abtrennt und hierfür eine in eingebauter Stellung im wesentlichen vertikal stehende Begrenzungswand (5; 6) umfaßt, wobei die Bauteilgruppe (2) als vormontierte und in eine Fahrzeugkarosserie einsetzbare Baueinheit (2) ausgebildet ist, die eine ausfahrbare Überrollschutzvorrichtung umfaßt, **dadurch gekennzeichnet, daß** die Baueinheit in Einbaustellung eine vordere (5) und eine hintere Wandung (6) umfaßt, zwischen denen die Überrolischutzvorrichtung (7), deren Antriebsteile (8) sowie eine Steuerung (9) für die Bewegung der Überrollschutzvorrichtung (7) angeordnet ist, daß die vordere (5) und die hintere Wandung (6) über eine oberseitige, in Einbaustellung im wesentlichen horizontale Verbindungswand (20) miteinander verbunden sind, von der sich ausgehend zumindest eine Wandung (5 oder 6) in Einbaustellung nach unten trapezförmig erweiternd erstreckt, und daß die Verbindungswand (20) mit Durchtrittsöffnung (21) für Überrollbügel (10; 11) versehen ist.

2. Baueinheit nach Anspruch 1, **dadurch gekennzeichnet, daß** in dem Raum zwischen vorderer (5) und hinterer Wand (6) zwei in kassettenartigem Rahmen (12) ausfahrbar gehaltenen Überrollschutzbügel (10; 11) auf beiden Fahrzeugseiten vorgesehen sind, zwischen denen die vordere (5) und die hintere Wandung (6) jeweils eine Ausnehmung aufweisen, wobei die beiden Ausnehmungen miteinander fluchten und in Einbaustellung eine Durchlademöglichkeit zwischen dem Insassenraum (3) und dem heckwärtigen Fahrzeugbereich (4) ausbilden.

3. Baueinheit nach Anspruch 1 oder 2, **dadurch gekennzeichnet, daß** an unteren und/oder seitlichen Bereichen der Baueinheit (2) abgewinkelte Flanschbereiche (17; 18; 19) ausgebildet sind, über die die Baueinheit (2) in der aufnehmenden Fahrzeugkarosserie festlegbar ist

4. Baueinheit nach einem der Ansprüche 1 bis 3, **dadurch gekennzeichnet daß** die Wandungen (5; 6) der Baueinheit (2) aus einem Material bestehen, das zumindest bereichsweise aus aufgeschäumtem metallischem Schaumwerkstoff besteht.

5. Baueinheit nach einem der Ansprüche 1 bis 4, **dadurch gekennzeichnet, daß** die Baueinheit (2) zusätzlich beidseitige Halterungen (30) für die Hauptlager (31) eines anzumontierenden Daches (40) des Cabriolet-Fahrzeugs umfaßt.

6. Baueinheit nach Anspruch 5, **dadurch gekennzeichnet, daß** diese zusätzlich mit einem Hydrauliksystem zur Bewegung des anzumontierenden Daches (40) ausgestattet ist.

7. Baueinheit nach Anspruch 6, **dadurch gekennzeichnet, daß** das Hydrauliksytem seitliche Hydraulikzylinder (32) als Antriebselemente für die Bewegung des ein- und ausfahrbaren Daches (40) umfaßt sowie einen Pumpenantrieb zur Bewegung der Hydraulikzylinder (32).

8. Baueinheit nach Anspruch 7, **dadurch gekennzeichnet, daß** das Hydrauliksystem der Baueinheit (2) vor deren Montage in die Karosserie befüllt und funktionsfähig ansteuerbar ist

9. Baueinheit nach einem der Ansprüche 6 bis 8, **dadurch gekennzeichnet, daß** die Baueinheit (2) ein bewegliches, an den seitlichen Halterungen (30) für das Hauptlager (31) des Daches (40) anmontiertes Dach (40) umfaßt.

10. Baueinheit nach Anspruch 9, **dadurch gekennzeichnet, daß** das Dach (40) mehrere feste Dachteile (41;42;43) umfaßt.

11. Baueinheit nach einem der Ansprüche 9 oder 10, **dadurch gekennzeichnet, daß** das Dach mit seinen dieses bewegenden Gestängeteilen (33) funktionsfähig mit den Antriebselementen (32) zu dessen Bewegung verbunden ist.

12. Baueinheit nach einem oder mehreren der Ansprüche 1 bis 11, **dadurch gekennzeichnet, daß** die Baueinheit (2) einen tragenden und torsionsmindernden Teil der Karosserie ausbildet.

13. Baueinheit nach einem derAnsprüche 1 bis 12, **dadurch gekennzeichnet, daß** die Baueinheit mit einer weiteren als Heckdeckel eines Cabriolet-Fahrzeuges ausgebildeten Baueinheit (50) zu einem Komplettmodul (60) zusammengefaßt ist, das in eine aufnahmebereite Fahrzeugkarosserie einsetzbar ist, wobei die Baueinheit (50) Antriebsorgane (56) zur Bewirkung der Freigabe einer Durchtrittsöffnung für ein Dach (40) eines Cabriolet-Fahrzeuges und ein Einfach- oder Mehrgelenk zur Bewirkung der Öffnung einer Gepäckdurchtrittsöffnung des Cabriolet-Fahrzeuges umfaßt, die mit der Baueinheit (50) vormontiert sind.

14. Baueinheit nach Anspruch 12, **dadurch gekennzeichnet, daß** die Antriebsorgane (56) als Hydraulikzylinder ausgebildet sind und vor Montage des Heckdeckels (51) in die Karosserie das Hydrauliksystem zur Ansteuerung der Hydraulikzylinder befüllt und funktionsfähig sind.

## Claims

1. Sub-assembly (2) for a convertible vehicle (1), which sub-assembly (2) divides a passenger compartment (3) off from a rear part (4) of the vehicle and comprises for this purpose a boundary wall (5, 6) which is positioned substantially vertically in the installed position, the sub-assembly (2) taking the form of a pre-assembled structural unit (2) which can be inserted in the bodywork of a vehicle and which has an extendable rollover protection arrangement, **characterised in that** the structural unit comprises, in the installed position, a front wall (5) and a rear wall (6), between which are arranged the rollover protection arrangement (7), the parts (8) for driving the latter and a means (9) for controlling the movement of the rollover protection arrangement (7), **in that** the front wall (5) and the rear wall (6) are connected together by a top connecting wall (20) which is substantially horizontal in the installed position and from which at least one wall (5 or 6) extends downwards in a widening trapezoidal shape in the installed position, and **in that** the connecting wall (20) is provided with openings (21) for rollover bars (10, 11) to pass through.

2. Structural unit according to claim 1, **characterised in that** two rollover bars (10, 11), which are held in cassette-like frames (12) in such a way as to be extendable, are provided on the two sides of the vehicle in the space between the front wall (5) and the rear wall (6), between which rollover bars (10, 11) the front wall (5) and the rear wall (6) each have an aperture, the two apertures lining up with one another and forming, in the installed position, a facility for passing items through between the passenger compartment (3) and the rear part (4) of the vehicle.

3. Structural unit according to claim 1 or 2, **characterised in that** angled flange regions (17, 18, 19), by means of which the structural unit (2) can be fixed in place in the receiving bodywork of the vehicle, are formed at bottom and/or lateral regions of the structural unit (2).

4. Structural unit according to one of claims 1 to 3, **characterised in that** the walls (5, 6) of the structural unit (2) are composed of a material which, at least in regions, is composed of foamed metallic foamable material.

5. Structural unit according to one of claims 1 to 4, **characterised in that** the structural unit (2) comprises, irraddition, supports (30) on both sides for the main mountings (31) of a roof (40) which is to be fitted to the convertible vehicle.

6. Structural unit according to claim 5, **characterised in that** it is equipped in addition with a hydraulic system for moving the roof (40) which is to be fitted.

7. Structural unit according to claim 6, **characterised in that** the hydraulic system comprises lateral hydraulic cylinders (32) as drive elements for moving the raisable and lowerable roof (40) and a pump drive for moving the hydraulic cylinders (32).

8. Structural unit according to claim 7, **characterised in that** the hydraulic system of the structural unit (2) is filled and can be actuated in a fully functioning manner before the structural unit (2) is fitted into the bodywork.

9. Structural unit according to one of claims 6 to 8, **characterised in that** the structural unit (2) comprises a movable roof (40) which is fitted to the lateral supports (30) for the main mountings (31) of the roof (40).

10. Structural unit according to claim 9, **characterised in that** the roof (40) comprises a plurality of solid roof components (41, 42, 43).

11. Structural unit according to either of claims 9 and 10, **characterised in that** the roof is connected in a fully functioning manner to the drive elements (32) for moving it by its linkage members (33) which move it.

12. Structural unit according to any of claims 1 to 11, **characterised in that** the structural unit (2) forms a load-bearing and torsion-reducing part of the bodywork.

13. Structural unit according to one of claims 1 to 12, **characterised in that** the structural unit is combined with a further structural unit (50), which forms a rear lid for a convertible vehicle, to form a complete module (60) which can be inserted into a vehicle bodywork which is ready to receive it, the structural unit (50) comprising drive members (56) for effecting the opening of an opening for the roof (40) of a convertible vehicle to pass through and a single joint or multiple joints for effecting the opening of an opening in the convertible vehicle for luggage to pass through, which drive members (56) and joint or joints are pre-fitted to the structural unit (50).

14. Structural unit according to claim 12, **characterised in that** the drive members (56) are in the form of hydraulic cylinders and the hydraulic system for actuating the hydraulic cylinders is filled and fully functional before the rear lid (51) is fitted into the bodywork.

## Revendications

1. Ensemble de composants (2) pour un véhicule cabriolet (1), l'ensemble de composants (2) séparant un habitacle (3) d'une zone arrière de véhicule (4) et comprenant à cet effet une paroi de délimitation (5 ; 6) pour l'essentiel verticale en position montée, l'ensemble de composants (2) étant un module (2) préassemblé pouvant être inséré dans une carrosserie de véhicule et comprenant un dispositif de protection de renversement,
**caractérisé en ce qu'**
en position montée le module comprend une paroi avant (5) et une paroi arrière (6) entre lesquelles sont disposés le dispositif de protection de renversement (7), les éléments d'entraînement (8) de celui-ci ainsi qu'une commande (9) pour le mouvement du dispositif de protection de renversement (7), la paroi avant (5) et la paroi arrière (6) sont reliées l'une à l'autre par une paroi de liaison (20) supérieure en position montée pour l'essentiel horizontale, depuis laquelle s'étend au moins une paroi (5 ou 6) s'évasant en position montée en forme de trapèze vers le bas, et la paroi de liaison (20) est munie d'ouvertures de passage (21) pour des arceaux de sécurité (10 ; 11).

2. Module selon la revendication 1,
**caractérisé en ce que**
dans l'espace entre la paroi avant (5) et la paroi arrière (6), on prévoit de part et d'autre du véhicule, deux arceaux de sécurité (10 ; 11) maintenus en coulissement dans un cadre (12) en forme de cassette, et entre lesquels la paroi avant (5) et la paroi arrière (6) présentent chaque fois un évidement, les deux évidements étant alignés l'un sur l'autre et formant, en position montée, une possibilité de chargement entre l'habitacle (3) et la zone arrière de véhicule (4).

3. Module selon la revendication 1 ou 2,
**caractérisé en ce que**
des zones à brides (17 ; 18 ; 19) repliées sont formées sur des zones inférieures et/ou latérales du module (2), pour fixer le module (2) dans la carrosserie de véhicule réceptrice.

4. Module selon l'une quelconque des revendications 1 à 3,
**caractérisé en ce que**
les parois (5 ; 6) du module (2) sont réalisées en un matériau expansé qui du moins par zone est un matériau en métal expansé.

5. Module selon l'une quelconque des revendications 1 à 4,
**caractérisé en ce que**
le module comprend en outre des supports bilatéraux (30) pour les paliers principaux (31) d'un toit à monter (40) du véhicule cabriolet.

6. Module selon la revendication 5,
**caractérisé en ce qu'**
il est en outre muni d'un système hydraulique pour le mouvement du toit à monter (40).

7. Module selon la revendication 6,
**caractérisé en ce que**
le système hydraulique comprend des vérins hydrauliques latéraux (32) servant d'éléments d'entraînement pour le mouvement du toit mobile (40), ainsi qu'un entraînement de pompe pour le mouvement des vérins hydrauliques (32).

8. Module selon la revendication 7,
**caractérisé en ce que**
le système hydraulique du module (2) est rempli et peut être commandé de manière opérationnelle avant son montage dans la carrosserie.

9. Module selon l'une quelconque des revendications 6 à 8,
**caractérisé en ce que**
le module (1) comprend un toit mobile (40) monté sur les supports latéraux (30) pour le palier principal (31) du toit (40).

10. Module selon la revendication 9,
**caractérisé en ce que**
le toit (40) comprend plusieurs parties de toit fixes (41 ; 42 ; 43).

11. Module selon l'une quelconque des revendications 9 ou 10,
**caractérisé en ce que**
par ses parties de tringlerie (33) qui le déplacent, le toit est relié de manière opérationnelle aux éléments d'entraînement (32) pour son mouvement.

12. Module selon l'une ou plusieurs des revendications 1 à 11,
**caractérisé en ce que**
le module (2) forme une partie de la carrosserie porteuse et réductrice de torsions.

13. Module selon l'une quelconque des revendications 1 à 12,
**caractérisé en ce que**
le module est assemblé à un autre module (50) servant de hayon d'un véhicule cabriolet pour former un modèle complet (60) qui peut être inséré dans une carrosserie de véhicule prête à le recevoir, le module (50) comprenant des organes d'entraînement (56) pour provoquer le dégagement d'une ouverture de passage pour un toit (40) d'un véhicule cabriolet et une articulation simple ou multiple pour provoquer l'ouverture d'une ouverture de passage de bagages du véhicule cabriolet, qui sont préassemblés avec le module (50).

14. Module selon la revendication 12,
**caractérisé en ce que**
les organes d'entraînement (56) sont des vérins hydrauliques, et le système hydraulique pour commander les vérins hydraulique est rempli et opérationnel avant le montage du hayon (51) dans la carrosserie.
